# EUROPÄISCHE PATENTSCHRIFT

(11) **EP 0 689 920 B1**
(45) Veröffentlichungstag und Bekanntmachung des Hinweises auf die Patenterteilung: **13.10.1999**
(21) Anmeldenummer: 95109419.2
(22) Anmeldetag: 19.06.1995
(51) Int. Cl.: B29C 44/46

(54) **Verfahren und Vorrichtung zum kontinuierlichen Herstellen von Schaumstoffblöcken oder Schaumstoffbahnen**
Method and apparatus for the continuous production of foam plastic blocks or sheets
Procédé et dispositif pour la production en continu de blocs ou de feuilles en mousse plastique

(30) Priorität: 29.06.1994 DE 4422762
(43) Veröffentlichungstag der Anmeldung: 03.01.1996
(73) Patentinhaber: Hennecke GmbH, 51379 Leverkusen (DE)
(72) Erfinder: Sulzbach, Hans-Michael, D-53639 Königswinter (DE); Steilen, Herbert, D-53639 Königswinter (DE); Klahre, Horst, D-53757 Sankt Augustin (DE)
(74) Vertreter: Drope, Rüdiger, Dr.

(56) Entgegenhaltungen:
- EP-A- 0 021 564
- DE-A- 3 241 520
- FR-A- 2 446 165
- GB-A- 1 476 177
- US-A- 4 267 135

## Beschreibung

Die vorliegende Erfindung betrifft ein Verfahren und eine Vorrichtung zum kontinuierlichen Herstellen von rechteckigen Schaumstoffblöcken oder Schaumstoffbahnen aus einem flüssigen Schaum bzw. schäumbaren Reaktionsgemisch, insbesondere einem zu Polyurethan reagierenden Ausgangsgemisch aus Polyisocyanten; Isocyanat-reaktive Wasserstoffatome enthaltenden Verbindungen, wie Polyester-oder Polyetherpolyole; Katalysatoren; Stabilisatoren; Treibmitteln, wie Wasser; niedrig-siedenden Olefinen, wie Pentan; flüssigem Kohlendioxid und anderen Zusatzstoffen.

Zur kontinuierlichen Herstellung von Schaumstoffblöcken bzw. -bahnen wird das schäumbare Gemisch, das im allgemeinen eine Viskosität zwischen 200 und 2.000 mPa.s aufweist, auf eine auf einem Transportband aufliegende untere Kaschieifolie aufgetragen, über die Breite des Transportbandes verteilt, mit einer oberen Kaschierfolie versehen, ausgehärtet und - quer zur Bewegungsrichtung des Transportbandes - in Blöcke geschnitten.

Die schäumbare Mischung, die auf das Transportband aufgetragen wird, kann eine Dichte zwischen 50 und 1.200 kg/m³ aufweisen, je nachdem, ob ein blasenfreies Reaktionsgemisch aufgetragen wird, das erst auf dem Transportband aufgrund der Reaktion von Wasser mit dem Isocyanat unter Bildung von CO₂ aufschäumt (chemische Schaumbildung, Steigzeit), oder ob ein flüssiger Schaum (Froth) aufgetragen wird, der durch Einschlagen von Luft (mechanische Schaumbildung) oder durch Vermischen mit flüssigem Kohlendioxid unter Druck (physikalische Schaumbildung) erzeugt wurde, der dann anschließend durch zusätzliche chemische Schaumbildung weiter expandiert wird.

Das technisch am weitesten verbreitete Verfahren des Schaumauftrags besteht darin, aus einer oder mehreren, im wesentlichen punktförmigen Austragsvorrichtung(en), die an den Mischkopf für die Herstellung des Reaktionsgemisches angeschlossen ist (sind), das schäumbare Gemisch bzw. den Flüssigschaum auf das Transportband zu fördern. Dabei besteht das Problem, einerseits das schäumbare Gemisch gleichmäßig über die Breite des Transportbandes zu verteilen und andererseits zu verhindern, daß es beim Aufbringen der oberen Kaschierfolie zu Lufteinschlüssen kommt.

Gemäß DE-A 2 557 572 wurde zur Lösung dieses Problems vorgeschlagen, die obere Kaschierfolie über eine Rolle bzw. eine Kufe unter Umlenkung von oben zuzuführen, wobei die Rolle bzw. Kufe in die auf dem Transportband befindliche schäumbare Mischung derart eintaucht, daß sich auf der Rückseite (in bezug auf die Bewegungsrichtung des Transportbandes) ein Stauberg der schäumbaren Mischung ausbildet, der einen Lufteintritt unter das obere Transportband verhindert und gleichzeitig zur Vergleichmäßigung der Verteilung der Mischung über die Breite des Transportbandes beiträgt.

Zur Gewährleistung eines gleichmäßigen Alters der schäumbaren Mischung ist das Transportband - zumindest im Bereich der Aufgabe - in Transportrichtung abschüssig geneigt. Hierdurch wird vermieden, daß die schäumbare Mischung sich im Augenblick des Auftrages entgegen der Transportrichtung ausbreitet, wodurch eine unvorteilhafte Altersverteilung des Schaumes begünstigt würde. Aufgrund dieser Neigung des Transportbandes wird die schäumbare Mischung nicht nur vom Transportband mitgeführt, sondern erhält eine zusätzliche Fließgeschwindigkeit relativ zum Transportband. Diese Fließgeschwindigkeit ist in der Verlängerung der Aufgabestelle in Transportrichtung am größten. Die schäumbare Mischung tritt also unter der in diese eintauchenden Umlenkrolle für das obere Transportband mit einem über die Breite des Transportbandes strukturierten Strömungsprofil hindurch, so daß ein rechteckiger Schaumquerschnitt mit gleichmäßiger Schaumdichte nur unzureichend realisiert werden kann.

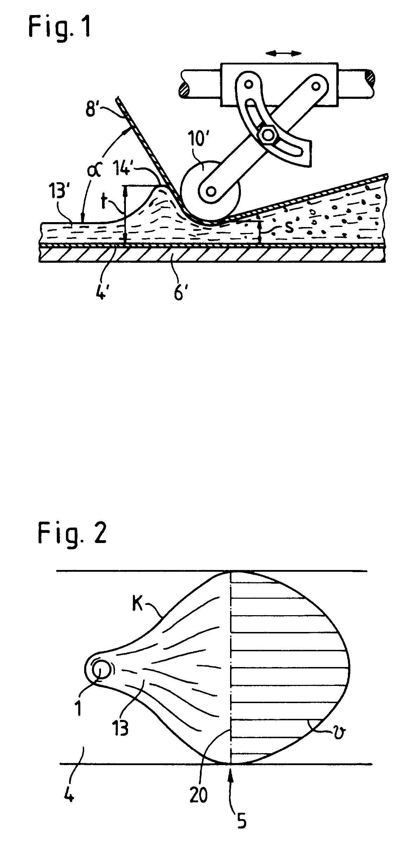

Dieser Stand der Technik ist in der angefügten Fig. 1, die Fig. 2 der DE-A 2 557 572 entspricht, sowie in schematischer Aufsicht auf das Transportband in Fig. 2 dargestellt.

Gemäß EP-A 25 084, auf die sich der Oberbegriff der unabhängigen Ansprüche stützt, wurde ferner bereits vorgeschlagen, anstelle der in die schäumbare Mischung eintauchenden Umlenkrolle für die obere Kaschierfolie ein im wesentlichen zum Transportband paralleles, flächig ausgedehntes Umlenkelement einzusetzen, so daß ein Strömungskanal in Transportband-Richtung gebildet wird. Es hat sich aber gezeigt, daß ein fester Abstand zwischen dem flächigen Umlenkelement und dem Transportband den während einer längeren Betriebszeit der Anlage auftretenden gegebenenfalls nur geringen Schwankungen des Fließverhaltens des schäumbaren Gemisches nicht gerecht wird. Entweder wird dann (bei zu geringem Abstand) das Gemisch gegen die Seitenbegrenzungswände gedrückt oder (bei zu großem Abstand) erreicht das Gemisch die Seitenbegrenzungswände nicht. Dies ist besonders dann der Fall, wenn die schäumbare Mischung bereits aus einem Froth besteht, d.h. durch Entspannung einer unter Druck stehenden Reaktionsmischung erhalten wurde, die z.B. physikalisch gelöstes Kohlendioxid enthält. Erfindungsgemäß wird daher vorgeschlagen, den Abstand des Umlenkelementes lediglich am Eintrittsende für die schäumbare Mischung in den Kanal justierbar festzulegen und im übrigen zugelassen, daß das flächige Umlenkelement um die Achse der Festlegung am Eintrittsende für die schäumbare Mischung frei pendelt, wobei das frei pendelnde Austrittsende einen justierbaren Druck auf die schäumbare Mischung ausübt. Der Abstand am Eintrittsende und der Druck kann durch entsprechende Gewichtsbelastung des frei pendelnden Endes bzw. hydraulisch derart bereitgestellt werden, daß das flächige Umlenkelement im wesentlichen parallel zum Transportband auf der schäumbaren Mischung aufliegt.

Dabei soll die Ausdehnung des Umlenkelementes in Transportband-Richtung den mittleren Abstand des Umlenkelementes vom Transportband um ein Vielfaches übersteigen, d.h. die Ausdehnung des Kanals in Transportband-Richtung L soll ein Vielfaches der mittleren Höhe H_{M} des Kanals betragen. Vorzugsweise soll das Verhältnis aus L und H_{M} zwischen 10 und 100 liegen, besonders bevorzugt zwischen 20 und 30.

Der Kanal bildet einen sich selbst an Änderungen des Fließverhaltens der schäumbaren Mischung anpassenden Strömungswiderstand gegen das Fließen der schäumbaren Mischung relativ zum Transportband bzw. den mit der schäumbaren Mischung in Berührung stehenden oberen und unteren Kaschierfolien, so daß eine wirksame Querverteilung der schäumbaren Mischung auf dem Transportband erfolgt.

Erfindungsgemäß bevorzugt soll die Höhe des Kanals am Austritt der schäumbaren Mischung H_{A} maximal zwischen einem Drittel und dem Dreifachen, vorzugsweise zwischen der Hälfte und dem Doppelten, der Höhe des Kanals am Eintritt der schäumbaren Mischung H_{E} schwanken.

Vorzugsweise ist ferner vorgesehen, daß der Auflagedruck des frei pendelnden Austrittsendes ohne Betriebsunterbrechung regelbar ist.

Nach einer weiter bevorzugten Ausführungsform der Erfindung wird das Umlenkelement durch eine Folie abgedeckt, an der die schäumbare Mischung nicht haftet (Trennfolioe), die mit einer Geschwindigkeit, die lediglich 1/10 bis 1/1000 der Transportbandgeschwindigkeit entspricht, läuft und die nach Durchgang durch den vom Umlenkelement gebildeten Kanal von der schäumbaren Mischung abgezogen und gegebenenfalls aufgewickelt wird. Die Zuführung einer oberen Kaschierfolie für den Schaum erfolgt dann nach dem Durchgang der schäumbaren Mischung durch den Kanal.

Die Erfindung wird nachfolgend anhand der beigefügten Figuren näher erläutert:

Fig. 1 zeigt die Vorrichtung nach dem Stand der Technik, mittels derer das Eintreten von Luft in den Zwischenraum zwischen den Kaschierfolien verhindert wird. Auf die untere Kaschierfolie 4, die auf dem Transportband 6 geführt wird, wurde die schäumbare Mischung 13 aufgebracht. Die obere Kaschierfolie 8 wird im wesentlichen von oben über die in die schäumbare Mischung 13 eintauchende Umlenkrolle 10 in Kontakt mit der schäumbaren Mischung gebracht. Dabei ist der Spalt S, d. h. der geringste Abstand zwischen dem Transportband 6 und der oberen Kaschierfolie 8, so gewählt, daß sich in Transportrichtung hinter der Umlenkrolle 10 eine Barriere 14 aus aufgestauter schäumbarer Mischung ausbildet. Der Ort des Eintauchens der Umlenkrolle 10 in die schäumbare Mischung ist derart gewählt, daß in Transportrichtung vor der Rolle 10 das Aufsteigen des Schaumes aufgrund der chemischen Reaktion beginnt.

Fig. 2 zeigt schematisch in überhöhter Darstellung eine Aufsicht auf das Transportband gemäß Fig. 1. Die schäumbare Masse 13 wird an der angenähert punktförmigen Aufgabestelle 1 auf die untere Kaschierfolie 4 aufgebracht. Aufgrund des Fließens der schäumbaren Masse 13 ergibt sich die etwa dargestellte Verteilungskontur K der schäumbaren Masse 13 bis zum Eintritt in den Spalt S, der durch die Linie 20 angedeutet ist. Rechts von Linie 20 ist das Fließgeschwindigkeitsprofil relativ zur unteren Kaschierfolie 4 der schäumbaren Mischung durch den Spalt S dargestellt.

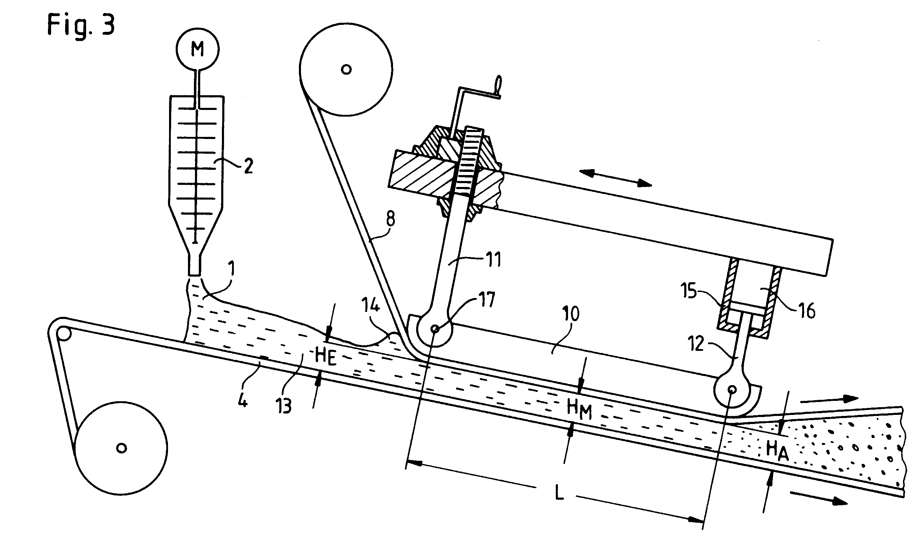

Fig. 3 erläutert das erfindungsgemäße Verfahren und die erfindungsgemäße Vorrichtung. Die schäumbare Mischung 13 wird an der Aufgabestelle 1 aus dem Mischkopf 2 auf die untere Kaschierfolie 4 aufgebracht. Die Kaschierfolie 4 läuft auf einem nicht gezeichneten Transportband. Die obere Kaschierfolie 8 wird der schäumbaren Mischung 13 von oben, d.h. bevorzugt unter einem Winkel von mindestens 60°, mit der unteren Kaschierfolie 4 zugeführt und gleitet an dem erfindungsgemäßen Umlenkelement 10 entlang. Der Abstand am Eintrittsende H_{E} des Umlenkelementes 10 von der Kaschierfolie 4 wird mittels der höhenjustierbaren Halterung 11 so gewählt, daß sich in Transportrichtung hinter dem Umlenkelement eine Barriere 14 aus aufgestauter schäumbarer Mischung ausbildet, die den Eintritt von Luft zwischen die Kaschierfolien verhindert. Das Umlenkelement 10 ist an seiner Unterseite flächig ausgebildet, so daß ein Kanal der Länge L gebildet wird. Das Umlenkelement 10 kann um die Achse 17 an der Eingangsseite für die schäumbare Mischung in den durch Umlenkelement 10 und untere Kaschierfolie 4 gebildeten Kanal frei pendeln. Dabei wird über das Hydraulikelement 15, das auf die ausgangsseitige Halterung des Umlenkelements 12 wirkt, ein hydraulisch einstellbarer Auflagedruck des Umlenkelementes 10 auf die schäumbare Mischung gewährleistet. Erfindungsgemäß soll die Länge L des Umlenkelementes ein Vielfaches der mittleren Höhe H_{M} des aus unterer Kaschierfolie 4 und Umlenkelement 10 gebildeten Kanals betragen. Die Positionierung des Umlenkelementes 10 in Transportrichtung erfolgt derart, daß das Aufsteigen des Schaumes im Anschluß an den Austritt der schäumbaren Mischung aus dem Kanal erfolgt.

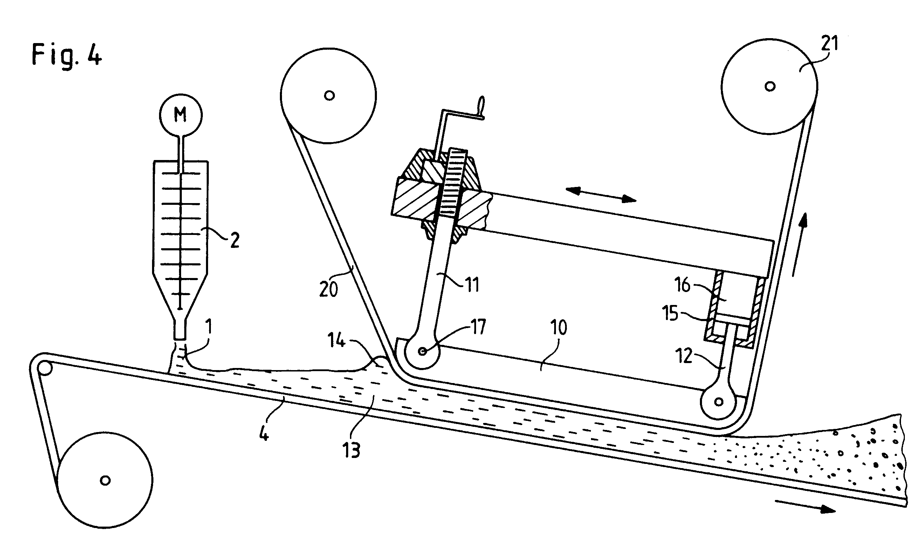

Fig. 4 zeigt eine erfindungsgemäße Vorrichtung analog Fig. 3, wobei jedoch anstelle der oberen Kaschierfolie eine langsam laufende Polyethylenfolie 20 vorgesehen ist, die auf der Rolle 21 wieder aufgewickelt wird.

## Patentansprüche

1. Verfahren zur kontinuierlichen Herstellung von Schaumstoffblöcken oder Schaumstoffbahnen mit im wesentlichen rechteckigem Querschnitt aus einem schäumbaren, flüssigen Reaktionsgemisch, gegebenenfalls in Form eines flüssigen Vorschaumes, wobei das Reaktionsgemisch aus einem stationären Mischkopf auf eine in Längsrichtung geneigte, bewegte untere Kaschierfolie aufgebracht wird, von oben eine obere Abdeckfolie zugeführt wird, die mittels eines in das Reaktionsgemisch eintauchenden Umlenkelementes in Kontakt mit dem Reaktionsgemisch gebracht wird, wobei das Umlenkelement in Längsrichtung flächig ausgebildet ist, so daß zwischen der unteren Abdeckfolie und der durch das Umlenkelement geführten oberen Abdeckfolie ein Kanal mit im wesentlichen konstantem Querschnitt gebildet wird, dessen Ausdehnung L in Längsrichtung die mittlere Höhe H_{M} um ein Vielfaches übersteigt, dadurch gekennzeichnet, daß die Höhe des Kanals H_{E} am Eintritt des Reaktionsgemisches einstellbar vorgegeben ist und die Höhe des Kanals H_{A} am Austritt des Reaktionsgemisches sich entsprechend einem justierbar vorgegebenen Auflagedruck des Umlenkelementes selbst reguliert.

2. Verfahren nach Anspruch 1, dadurch gekennzeichnet, daß das Verhältnis L / H_{M} zwischen 10 und 100, vorzugsweise zwischen 20 und 30, liegt.

3. Verfahren nach Anspruch 1 oder 2, dadurch gekennzeichnet, daß die Höhe des Kanals am Austritt des Reaktionsgemisches H_{A} im Vergleich zur Höhe des Kanals am Eintritt des Reaktionsgemisches H_{E} im Verhältnis 0,3:1 und 3,0:1 pendeln kann.

4. Verfahren nach einem der Ansprüche 1 bis 3, dadurch gekennzeichnet, daß die obere, das Umlenkelement abdeckende Abdeckfolie mit einer Geschwindigkeit, die 1/10 bis 1/1000 der Geschwindigkeit der unteren Kaschierfolie bewegt wird und hinter dem Umlenkelement von dem Reaktionsgemisch abgezogen wird.

5. Vorrichtung zur Durchführung des Verfahrens gemäß Ansprüchen 1 bis 4, enthaltend einen stationären Mischkopf über einem geneigten Aufgabetisch, Mitteln zur kontinuierlichen Führung einer unteren Kaschierfolie über den Aufgabetisch, Mitteln zur Zuführung einer oberen Abdeckfolie sowie ein in Bewegungsrichtung der unteren Kaschierfolie flächig ausgedehntes Umlenkelement für die obere Abdeckfolie, wobei das Umlenkelement die obere Abdeckfolie im wesentlichen parallel zur unteren Kaschierfolie unter Ausbildung eines Kanals zwischen den Kaschierfolien führt, wobei der Kanal eine Länge aufweist, die die mittlere Höhe des Kanals um ein Vielfaches übersteigt, das Umlenkelement an der Eingangsseite einen einstellbar vorgegebenen Abstand von der unteren Kaschierfolie aufweist, dadurch gekennzeichnet, daß das Umlenkelement um eine Achse quer zur Führungsrichtung der unteren Kaschierfolie an der Eingangsseite schwenkbar ist und Mittel zur Erzeugung eines justierbar vorgegebenen Druckes gegen die Schwenkbewegung vorgesehen sind.

## Claims

1. Method for the continuous production of foam plastic blocks or sheets having a substantially rectangular cross-section from a foamable, liquid reaction mixture, optionally in the form of a liquid pre-expanded foam, wherein the reaction mixture is applied from a stationary mixing head to a moved lower laminating film inclined in the longitudinal direction, an upper covering film is guided from above and is brought into contact with the reaction mixture by means of a deflecting element dipping into the said reaction mixture, wherein the deflecting element is formed planar in the longitudinal direction so that between the lower covering foil and the upper covering foil guided by the deflecting element a channel is formed having a substantially constant cross-section, whose extension L in the longitudinal direction exceeds the mean height H_{M} by a multiple, characterised in that the height of the channel H_{E} at the inlet of the reaction mixture can be adjustably set and the height of the channel H_{A} at the outlet of the reaction mixture regulates itself corresponding to an adjustably predetermined application pressure of the deflecting element.

2. Method according to claim 1, characterised in that the ratio L/H_{M} is between 10 and 100, preferably between 20 and 30.

3. Method according to claim 1 or 2, characterised in that the height of the channel at the outlet of the reaction mixture H_{A} compared to the height of the channel at the inlet of the reaction mixture H_{E} may vary between the ratios 0.3:1 and 3.0:1.

4. Method according to one of claims 1 to 3, characterised in that the upper covering film covering the deflecting element is moved at a rate that is 1/10 to 1/1000 of the rate of the lower laminating film and is withdrawn from the reaction mixture behind the deflecting element.

5. Apparatus for carrying out the process according to claims 1 to 4, containing a stationary mixing head above an inclined feeding table, means for the continuous guidance of a lower laminating film above the feeding table, means for guiding an upper covering film, as well as a deflecting element for the upper covering film extending in a laminar manner in the direction of movement of the lower laminating film, wherein the deflecting element guides the upper covering film substantially parallel to the lower laminating film with the formation of a channel between the laminating films, wherein the channel has a length that exceeds by a multiple the mean height of the channel and the deflecting element at the inlet side has an adjustably predetermined spacing from the lower laminating film, characterised in that the deflecting element can swivel about an axis transverse to the guiding direction of the lower laminating film at the inlet side and means are provided to generate an adjustably predetermined pressure against the swivelling movement.

## Revendications

1. Procédé pour la préparation continue de blocs de mousse ou de feuilles de mousse présentant une section transversale essentiellement rectangulaire à partir d'un mélange réactionnel liquide pouvant mousser, éventuellement dans la forme d'une écume liquide, le mélange réactionnel étant appliqué à partir d'une tête mélangeuse stationnaire sur une feuille laminée inférieure se déplaçant, inclinée dans la direction longitudinale, une feuille protectrice supérieure étant introduite à partir du haut, laquelle est mise en contact avec le mélange réactionnel à l'aide d'un élément de guidage plongeant dans le mélange réactionnel, l'élément de guidage étant formé de manière plane dans la direction longitudinale de telle sorte qu'entre la feuille protectrice inférieure et la feuille protectrice supérieure introduite par l'intermédiaire de l'élément de guidage est formé un canal présentant une section transversale essentiellement constante, dont l'étendue L dans la direction longitudinale dépasse largement la hauteur moyenne H_{M}, caractérisé en ce que la hauteur du canal H_{E} à l'entrée du mélange réactionnel est prédéterminée de manière réglable et la hauteur du canal H_{A} à la sortie du mélange réactionnel se règle d'elle-même selon une pression d'application prédéterminée de manière ajustable de l'élément de guidage.

2. Procédé selon la revendication 1, caractérisé en ce que le rapport L/H_{M} est compris entre 10 et 100, de préférence entre 20 et 30.

3. Procédé selon la revendication 1 ou 2, caractérisé en ce que la hauteur du canal à la sortie du mélange réactionnel H_{A} peut osciller par rapport à la hauteur du canal à l'entrée du mélange réactionnel H_{E} dans le rapport de 0,3 : 1 à 3,0:1.

4. Procédé selon l'une quelconque des revendications 1 à 3, caractérisé en ce que la feuille protectrice supérieure recouvrant l'élément de guidage se déplace avec une vitesse qui est de 1/10 à 1/1 000 de la vitesse de la feuille laminée inférieure et est retirée du mélange réactionnel après l'élément de guidage.

5. Dispositif pour la réalisation du procédé selon les revendications 1 à 4 comprenant une tête mélangeuse stationnaire sur une table d'application inclinée, un moyen pour l'introduction continue d'une feuille laminée inférieure sur la table d'application, un moyen pour l'introduction d'une feuille protectrice supérieure ainsi qu'un élément de guidage pour la feuille protectrice supérieure, allongé de manière plane dans la direction de déplacement de la feuille laminée inférieure, l'élément de guidage introduisant la feuille protectrice supérieure de manière essentiellement parallèle à la feuille laminée inférieure en formant un canal entre les feuilles laminées, le canal présentant une longueur qui dépasse largement la hauteur moyenne du canal, l'élément de guidage présentant sur le coté de l'entrée une distance prédéterminée de manière réglable de la feuille laminée inférieure, caractérisé en ce que l'élément de guidage peut tourner autour d'un axe perpendiculairement à la direction d'introduction de la feuille laminée inférieure sur le côté de l'entrée et que sont prévus des moyens pour produire une pression prédéterminée de manière ajustable contre le mouvement de rotation.
